# EUROPÄISCHE PATENTSCHRIFT

(11) **EP 1 184 240 B1**
(45) Veröffentlichungstag und Bekanntmachung des Hinweises auf die Patenterteilung: **04.01.2006**
(21) Anmeldenummer: 01120037.5
(22) Anmeldetag: 20.08.2001
(51) Int. Cl.: B60S 1/52

(54) **Vorrichtung zur Besprühung einer Scheibe eines Kraftfahrzeuges mit Waschflüssigkeit**
Device for spraying a vehicle window with washing liquid
Dispositif d'aspersion d'une vitre de véhicule avec du liquide de lavage

(30) Priorität: 04.09.2000 DE 10043721
(43) Veröffentlichungstag der Anmeldung: 06.03.2002
(73) Patentinhaber: SIEMENS AKTIENGESELLSCHAFT, 80333 München (DE)
(72) Erfinder: Kober, Rainer, 64297 Darmstadt (DE)

(56) Entgegenhaltungen:
- EP-A- 0 995 651
- EP-A- 1 006 031
- DE-A- 4 100 884
- DE-A- 19 746 059
- DE-A- 19 753 780
- DE-A- 19 907 630
- FR-A- 2 390 312
- US-A- 3 141 617
- US-A- 4 865 059
- US-A- 5 865 376
- PATENT ABSTRACTS OF JAPAN vol. 1996, no. 04, 30. April 1996 (1996-04-30) -& JP 07 329734 A (MITSUBA ELECTRIC MFG CO LTD), 19. Dezember 1995 (1995-12-19)

## Beschreibung

Die Erfindung betrifft eine Vorrichtung zur Besprühung einer Scheibe eines Kraftfahrzeuges mit Waschflüssigkeit, mit einem Düsengehäuse zur Halterung einer Waschdüse, mit einem Anschlussstück zur Verbindung des Düsengehäuses mit einer Waschflüssigkeitsleitung einer Scheibenreinigungsanlage und mit Haltemitteln zur Befestigung des Düsengehäuses an einem Karosserieteil des Kraftfahrzeuges.

Eine gattungsgemäße Waschvorrichtung ist beispielsweise aus den Dokument DE-A-19753780 und DE-A-19746059 bekannt.

Solche Vorrichtungen werden beispielsweise zur Reinigung einer Frontscheibe, einer Heckscheibe oder von Streuscheiben von Scheinwerfern heutiger Kraftfahrzeuge eingesetzt und sind aus der Praxis bekannt. Bei der aus der Praxis bekannten Vorrichtung sind die Haltemittel an dem Anschlussstück angeordnet. Das Düsengehäuse ist gegenüber dem Anschlussstück verstellbar gehalten. Die bekannte Vorrichtung hat den Vorteil, dass sich ein von der Waschdüse erzeugter Waschflüssigkeitsstrahl gegenüber der Scheibe einstellen lässt.

Nachteilig bei den bekannten Vorrichtungen ist, dass sich ihre Beheizung durch die Anzahl der waschflüssigkeit führenden Bauteile sehr aufwändig gestaltet. Hierbei sind an dem Anschlussstück und dem Düsengehäuse jeweils Heizelemente zu montieren und diese mit elektrischen Leitungen zu verbinden. Weiterhin gestaltet sich die Abdichtung der beweglichen Verbindung des Anschlussstücks mit dem Düsengehäuse sehr schwierig.

Der Erfindung liegt das Problem zugrunde, eine Vorrichtung der eingangs genannten Art so zu gestalten, dass sie konstruktiv besonders einfach aufgebaut ist und eine besonders einfache Beheizung der Waschflüssigkeit führenden Bauteile ermöglicht.

Dieses Problem wird erfindungsgemäß durch die Merkmale des kennzeichnenden Teils des Anspruchs 1 gelöst.

Durch diese Gestaltung lässt sich der Waschflüssigkeitsstrahl gegenüber der Scheibe durch eine Bewegung des Düsengehäuses gegenüber einem Halteelement einstellen. Hierdurch lassen sich aufwändig abzudichtende Gelenke zwischen Waschflüssigkeit führenden Bauteilen einfach vermeiden. Weiterhin benötigt die erfindungsgemäße Vorrichtung nur ein einziges Heizelement zur vollständigen Beheizung der Waschflüssigkeit führenden Bauteile. Die erfindungsgemäße Vorrichtung ist daher konstruktiv besonders einfach aufgebaut.

Zur weiteren Vereinfachung des Aufbaus der erfindungsgemäßen Vorrichtung trägt es bei, wenn das Düsengehäuse und das Anschlussstück als bauliche Einheit gefertigt sind.

Der von der Waschdüse erzeugte Waschflüssigkeitsstrahl lässt sich erfindungsgemäß um alle drei Raumachsen verstellen, und das Gelenk als Kugelgelenk ausgebildet ist.

Ein Leerlaufen des Düsengehäuses und der Waschflüssigkeitsleitung lässt sich gemäß einer anderen vorteilhaften Weiterbildung der Erfindung einfach vermeiden, wenn das Düsengehäuse und/oder das Anschlussstück zur Aufnahme eines Rückschlagventils ausgebildet sind/ist. Durch diese Gestaltung werden Verzögerungen der Besprühung der Scheibe nach einem Start der Scheibenreinigungsanlage vermieden.

Das Rückschlagventil lässt sich gemäß einer anderen vorteilhaften Weiterbildung der Erfindung besonders kostengünstig herstellen, wenn ein Ventilsitz des Rückschlagventils auf dem Anschlussstück angeordnet ist und wenn eine Feder zur Vorspannung eines Ventilkörpers gegen den Ventilsitz sich an dem Düsengehäuse abstützend angeordnet ist. Hierdurch erfordert das Rückschlagventil eine besonders geringe Anzahl von Bauteilen.

In einer weiteren vorteilhaften Ausgestaltung kann das Ventil im Düsengehäuse ein sogenanntes Fahrradschlauchventil sein. Dieses besteht aus einem Stutzen mit seitlichen Öffnungen, die mit einem Schlauch verschlossen sind. Wird der Stutzen durchströmt, wird durch den Druck der Flüssigkeit der Schlauch im Bereich der Öffnungen geweitet, wodurch er die Öffnungen freigibt.

Die erfindungsgemäße Vorrichtung ist nach der Montage des Rückschlagventils zuverlässig abgedichtet, wenn das Anschlussstück und das Düsengehäuse stoffschlüssig miteinander verbunden sind.

Die Beheizung der Waschflüssigkeit führenden Bauteile erfordert gemäß einer anderen vorteilhaften Weiterbildung der Erfindung einen besonders geringen baulichen Aufwand, wenn ein Kanal für die Waschflüssigkeit in dem Düsengehäuse im Bereich von dem Anschlussstück bis zu der Waschdüse parallel zu einer Ausnehmung für ein Heizelement geführt ist. Hierdurch lässt sich ein einziges Heizelement in die Ausnehmung einführen und wie bei der bekannten Vorrichtung mit Vergussmasse befestigen.

Zur gleichmäßigen Verteilung der Wärme des Heizelementes über den gesamten wasserführenden Bereich trägt es gemäß einer anderen vorteilhaften Weiterbildung der Erfindung bei, wenn in der Ausnehmung für das Heizelement ein Wärmeleitblech angeordnet ist.

Die Einstellung der erfindungsgemäßen, im Kraftfahrzeug montierten Vorrichtung gestaltet sich besonders einfach, wenn das Düsengehäuse einen Vorsprung oder eine Vertiefung, z.B. ein Polygonprofil oder Außen-Torx zum Ansetzen eines Justagewerkzeuges hat. Damit lassen sich Beschädigungen der Vorrichtung beim Justieren vermeiden.

Eine erfindungsgemäße, in einem Kraftfahrzeug montierte Vorrichtung, ist in der Zeichung dargestellt und nachfolgend beschrieben.

Hierbei ist ein Teilbereich eines vor einer Scheibe 1 angeordneten Karosserieteils 2 des Kraftfahrzeuges stark vergrößert dargestellt. Bei dem Karosserieteil 2 kann es sich beispielsweise um eine Motorhaube und bei der Scheibe 1 um eine Frontscheibe handeln. Die erfindungsgemäße Vorrichtung hat ein mit dem Karosserieteil 2 verrastetes Halteelement 3 und ein mit dem Halteelement 3 über ein Gelenk 4 verbundenes Düsengehäuse 5. Das Gelenk 4 ist als Kugelgelenk ausgebildet und ermöglicht eine verschwenkung des Düsengehäuses 5 gegenüber dem Halteelement 3 um alle drei Raumachsen. Das Düsengehäuse 5 ist stoffschlüssig mit einem Anschlussstück 6 verbunden. Auf dem Anschlussstück 6 lässt sich eine nicht dargestellte Waschflüssigkeitsleitung einer Scheibenreinigungsanlage anschließen, die ihrerseits beheizt sein kann. An seinem dem Anschlussstück 6 gegenüberliegenden Ende haltert das Düsengehäuse 5 eine Waschdüse 7. Ein Kanal 8 zwischen dem Anschlussstück 6 und der Waschdüse 7 ist damit gerade durch das Düsengehäuse 5 geführt. In dem Kanal 8 ist ein Rückschlagventil 9 mit einem von einer Feder 10 gegen einen Ventilsitz 11 vorgespannten Ventilkörper 12 angeordnet. Der Ventilsitz 11 ist auf dem Anschlussstück 6 angeordnet, während sich die Feder 10 an dem Düsengehäuse 5 abstützt. Alternativ dazu kann das Rückschlagventil 9 als vormontierbare, in das Düsengehäuse 5 eingesetzte Einheit gestaltet sein. Die Verbindung des Düsengehäuses 5 mit dem Anschlussstück 6 kann beispielsweise geklebt oder geschweißt sein.

Parallel zu dem Kanal 8 hat das Düsengehäuse 5 eine Ausnehmung 13 zur Aufnahme eines Heizelementes 14. Das Heizelement 14 ist mit elektrischen Leitungen 15 verbunden und mittels Vergussmasse 16 in der Ausnehmung 13 gehalten. Zur gleichmäßigen Verteilung der von dem Heizelement 14 erzeugten Wärme ist in der Ausnehmung 13 ein Wärmeleitblech 17 angeordnet. Bei dem Heizelement 14 kann es sich beispielsweise um ein Widerstandselement mit einem festen ohmschen Widerstand oder ein PTC-Element, bei dem der Widerstand mit steigender Temperatur stark ansteigt, handeln. In seinem auf die Scheibe 1 zuweisenden Ende hat das Düsengehäuse 5 einen Vorsprung 18 zum Ansetzen eines Justagewerkzeuges.

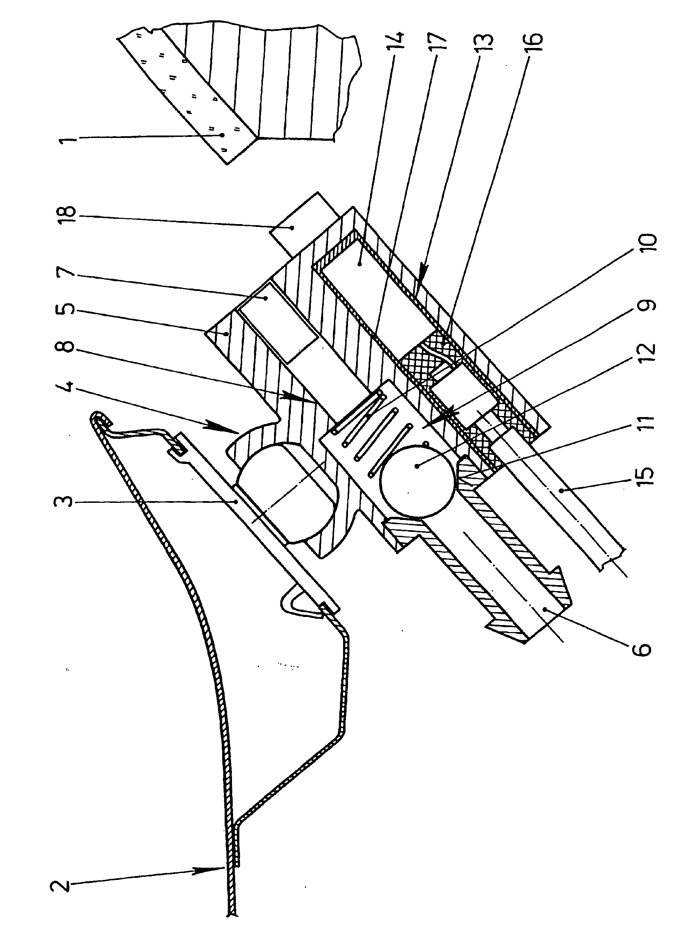

## Patentansprüche

1. Vorrichtung zur Besprühung einer Scheibe (1) eines Kraftfahrzeuges mit Waschflüssigkeit, mit einem Düsengehäuse (5) zur Halterung einer Waschdüse (7), mit einem Anschlussstück (6) zur Verbindung des Düsengehäuses (5) mit einer Waschflüssigkeitsleitung einer Scheibenreinigungsanlage und mit Haltemitteln zur Befestigung des Düsengehäuses (5) an einem Karosserieteil (2) des Kraftfahrzeuges, wobei die Haltemittel ein zur Befestigung an dem Karosserieteil (2) des Kraftfahrzeuges vorgesehenes Halteelement (3) aufweisen und zwischen dem Halteelement (3) und dem Düsengehäuse (5) ein Gelenk (4) angeordnet ist, wobei das Düsengehäuse (5) und das Anschlussstück (6) unbeweglich miteinander verbunden sind und das Halteelement (3) als von dem Anschlussstück (6) getrenntes Bauteil ausgebildet ist, **dadurch gekennzeichnet, dass** das Gelenk (4) als die Verstellung des von der Waschdüse (7) erzeugten Waschflüssigkeitsstrahls die drei Raumachsen ermöglichendes Kugelgelenk ausgebildet ist.

2. Vorrichtung nach Anspruch 1, **dadurch gekennzeichnet, dass** das Düsengehäuse (5) und das Anschlussstück (6) als bauliche Einheit gefertigt sind.

3. Vorrichtung nach zumindest einem der vorhergehenden Ansprüche, **dadurch gekennzeichnet, dass** das Düsengehäuse (5) und/oder das Anschlussstück (6) zur Aufnahme eines Rückschlagventils (9) ausgebildet sind/ist.

4. Vorrichtung nach zumindest einem der vorhergehenden Ansprüche, **dadurch gekennzeichnet, dass** ein Ventilsitz (11) des Rückschlagventils (9) auf dem Anschlussstück (6) angeordnet ist und dass eine Feder (10) zur Vorspannung eines Ventilkörpers (12) gegen den Ventilsitz (11) sich an dem Düsengehäuse (5) abstützend angeordnet ist.

5. Vorrichtung nach zumindest einem der vorhergehenden Ansprüche, **dadurch gekennzeichnet, dass** das Anschlussstück (6) und das Düsengehäuse (5) stoffschlüssig miteinander verbunden sind.

6. Vorrichtung nach zumindest einem der vorhergehenden Ansprüche, **dadurch gekennzeichnet, dass** ein Kanal (8) für die Waschflüssigkeit in dem Düsengehäuse (5) im Bereich von dem Anschlussstück (6) bis zu der Waschdüse (7) parallel zu einer Ausnehmung (13) für ein Heizelement (14) geführt ist.

7. Vorrichtung nach zumindest einem der vorhergehenden Ansprüche, **dadurch gekennzeichnet, dass** in der Ausnehmung (13) für das Heizelement (14) ein Wärmeleitblech (17), zum Beheizen des gesamten wasserführenden Bereichs angeordnet ist.

8. Vorrichtung nach zumindest einem der vorhergehenden Ansprüche, **dadurch gekennzeichnet, dass** das Düsengehäuse (5) einen Vorsprung (18) oder eine Vertiefung , vorzugsweise ein Polygon-Profil oder Außen-Torx zum Ansetzen eines Justagewerkzeuges hat.

9. Vorrichtung nach zumindest einem der vorhergehenden Ansprüche, **dadurch gekennzeichnet, dass** die Waschdüse (7) als Fluidic-Chip ausgebildet ist.

10. Vorrichtung nach zumindest einem der Ansprüche 1-9, **dadurch gekennzeichnet, dass** die Waschdüse (7) als Träger für eine oder mehrere Düsenkugeln, Flachstrahl- oder Duckbill-Düsen aus Metall oder Kunststoff ausgebildet ist.

## Claims

1. Device for spraying a screen (1) of a motor vehicle with washer fluid, having a nozzle housing (5) for mounting a washer nozzle (7), with a connection piece (6) for connecting the nozzle housing (5) to a washer fluid line of a screen washing system and with retainers for fixing the nozzle housing (5) to a body part (2) of the motor vehicle, the retainers having a retaining element (3) intended for fixing to the body part (2) of the motor vehicle, and a joint (4) being arranged between the retaining element (3) and the nozzle housing (5), the nozzle housing (5) and the connection piece (6) being immovable connected to one another and the retaining element (3) being designed as a component separate from the connection piece (6), **characterized in that** the joint (4) takes the form of a ball joint allowing the jet of washer fluid produced by the washer nozzle (7) to be adjusted in three axes.

2. Device according to Claim 1, **characterized in that** the nozzle housing (5) and the connection piece (6) are produced as an integral unit.

3. Device according to at least one of the preceding claims, **characterized in that** the nozzle housing (5) and/or the connection piece (6) is/are designed to accommodate a non-return valve (9).

4. Device according to at least one of the preceding claims, **characterized in that** a valve seat (11) of the non-return valve (9) is arranged on the connection piece (6) and that a spring (10) for preloading a valve body (12) against the valve seat (11) is arranged resting on the nozzle housing (5).

5. Device according to at least one of the preceding claims, **characterized in that** the connection piece (6) and the nozzle housing (5) are connected to one another by a cohesive material joint.

6. Device according to at least one of the preceding claims, **characterized in that** a duct (8) for the washer fluid in the nozzle housing (5) is led parallel to a recess (13) for a heating element (14) in the area from the connection piece (6) to the washer nozzle (7).

7. Device according to at least one of the preceding claims, **characterized in that** a heat baffle (17) for heating the entire waster-carrying area is arranged in the recess (13) for the heating element (14).

8. Device according to at least one of the preceding claims, **characterized in that** the nozzle housing (5) has a projection (18) or a depression, preferably a polygonal profile or an external torx fitting for the attachment of an adjusting tool.

9. Device according to at least one of the preceding claims, **characterized in that** the washer nozzle (7) takes the form of a fluidic chip.

10. Device according to at least one of Claims 1 to 9, **characterized in that** the washer nozzle (7) is designed as carrier for one or more nozzle balls, flat jet or duckbill nozzles made of metal or plastic.

## Revendications

1. Dispositif permettant d'asperger une vitre (1) d'un véhicule automobile avec du liquide de lavage et comportant un boîtier de gicleur (5) destiné à supporter un gicleur de lavage (7), une pièce de raccordement (6) pour assurer la liaison du boîtier de gicleur (5) avec une conduite de liquide de lavage d'un système de lavage des glaces et des moyens de retenue pour la fixation du boîtier de gicleur (5) à une pièce de carrosserie (2) du véhicule automobile, où les moyens de retenue comportent un élément de retenue (3) prévu pour la fixation sur la pièce de carrosserie (2) du véhicule automobile et où une articulation (4) est disposée entre l'élément de retenue (3) et le boîtier de gicleur (5), où le boîtier de gicleur (5) et la pièce de raccordement (6) sont liés l'un à l'autre d'une façon immobile et où l'élément de retenue (3) est conçu comme pièce séparée de la pièce de raccordement (6), **caractérisé par le fait que** l'articulation (4) est conçue comme articulation à rotule permettant le réglage du jet de liquide de lavage produit par le gicleur de lavage (7) dans les trois directions de l'espace.

2. Dispositif selon la revendication 1 **caractérisé par le fait que** le boîtier de gicleur (5) et la pièce de raccordement (6) sont fabriqués sous la forme d'une unité constructive.

3. Dispositif selon au moins l'une des revendications précédentes **caractérisé par le fait que** le boîtier de gicleur (5) et / ou la pièce de raccordement (6) sont conçus pour recevoir une soupape de retenue (9).

4. Dispositif selon au moins l'une des revendications précédentes **caractérisé par le fait qu'**un siège de soupape (11) de la soupape de retenue (9) est disposé sur la pièce de raccordement (6) et qu'un ressort (10) destiné à assurer une force de précontrainte d'un corps de soupape (12) contre le siège de la soupape (11) est disposé de telle sorte qu'il s'appuie sur le boîtier de gicleur (5).

5. Dispositif selon au moins l'une des revendications précédentes **caractérisé par le fait que** la pièce de raccordement (6) et le boîtier de gicleur (5) sont liés l'un à l'autre par association de matière.

6. Dispositif selon au moins l'une des revendications précédentes **caractérisé par le fait qu'**un canal (8) pour le liquide de lavage conduit, dans le boîtier de gicleur (5), dans la zone allant de la pièce de raccordement (6) au gicleur de lavage (7), parallèlement à un évidement (13) prévu pour un élément chauffant (14).

7. Dispositif selon au moins l'une des revendications précédentes **caractérisé par le fait qu'**une tôle thermoconductrice (17) est disposée dans l'évidement (13) pour l'élément chauffant (14) pour chauffer l'ensemble de la zone conduisant de l'eau.

8. Dispositif selon au moins l'une des revendications précédentes **caractérisé par le fait que** le boîtier de gicleur (5) a une avancée (18) ou un enfoncement, d'une façon préférentielle, un profil polygonal ou un embout extérieur Torx destiné à appliquer un outil de réglage.

9. Dispositif selon au moins l'une des revendications précédentes **caractérisé par le fait que** le gicleur de lavage (7) est conçu comme puce Fluidic.

10. Dispositif selon au moins l'une des revendications 1 à 9 **caractérisé par le fait que** le gicleur de lavage (7) est conçu comme support pour une ou plusieurs têtes de gicleur rondes, à faisceau plat ou duckbill, en métal ou en matière plastique.
